# EUROPEAN PATENT APPLICATION

(11) **EP 2 804 408 A1**
(43) Date of publication of application: **19.11.2014**
(21) Application number: 13194765.7
(22) Date of filing: 28.11.2013
(51) Int. Cl.: H04W 8/18, H04W 48/00

(54) **A method, system and user's mobile device for using Internet during roaming**

(30) Priority: 16.05.2013 EE 201300055 U; 16.05.2013 EE 201300056 U
(71) Applicant: OÜ Top Connect, 11415 Tallinn (EE)
(72) Inventor: Sobolev, Vladislav, 11415 Tallinn (EE)
(74) Representative: Mutt, Andres

(57) **Abstract**

The subject matter of the present invention is a method and a user's mobile device which provide access to the Internet for user's equipment (smartphone, laptop, etc.) during roaming through mobile networks (GSM, UMTS, LTE), where authentication by a SIM card is required. At the same time there is no need to conclude contract(s) with all mobile operator(s) or to purchase and replace respective SIM card(s). The subject matter of the present invention is also a system for realizing the respective method.

## Description

The present invention relates to the methods and devices which provide access to the Internet in GSM (*Global System for Mobile*), UMTS ( *Universal Mobile Telecommunication System*), LTE (*Long Term Evolution*) and other mobile networks (hereinafter - mobile networks), where a SIM card is required for the access authentication.

### Background Art

Millions of people use mobile Internet while travelling. However, using mobile Internet connection via a local operator outside the home network may be complicated and inconvenient.

In order to make use of local services when travelling from one country to another he/she has either to purchase a prepaid SIM card or to conclude a contract with a local mobile network operator, that is noticeably cheaper than using international roaming.

At the same time frequent manual replacing of SIM cards in several devices (mobile phone, laptop, etc.) and their setup in order to enable access to the Internet may be inconvenient and time consuming. Unfortunately, conclusion of a contract in a local operator's agency takes time, problems associated with the local language may arise, the minimum contract period may exceed the time of stay in that country, etc. When visiting a number of countries, conclusion of a number of contracts becomes too expensive, especially when the stay in these countries is of a short duration.

From prior art attempts to avoid manual replacement of SIM cards in GSM mobile phones when roaming from the network of one mobile operator to the network of another one are known. Patent application EP1850607A2 "Method and device for rerouting mobile communications", (Telecom en Consulting, BE, 2007) discloses a solution that differently from the present invention provides for making ordinary phone calls and not for using the Internet. According to this solution during roaming from one country or network to another in a conventional GSM an automatic switch of the SIM to a SIM card valid in that country or network takes place.

For that purpose the respective physical SIM cards of the corresponding different GSM operators or networks are allocated in a SIM card array located in a server. During normal operation a GSM phone uses a conventional SIM card as usual. In addition to the conventional SIM card the phone also includes a SIM card emulator which during roaming replaces the usual physically present SIM card that is disconnected. When it is determined that the location of a GSM phone has changed, then connection with the SIM card server is established and the phone's new location will be transmitted to the server. The SIM card server will search amongst available SIM cards the one matching with the respective country or operator and establishes a connection between the SIM card in an array and a SIM card emulator. In case a successful connection is established, the SIM card in a GSM phone will be disconnected and replaced with the SIM card emulator, to be interpreted by the GSM network as a SIM card present in the phone. Thereafter a second GPRS/IP connection will be established with the SIM card server and the first connection via the physical SIM card is disconnected.

The drawback of this kind of a solution is the circumstance that for the previously established connection via a physical SIM card and the connection with the SIM card server the same radio module is used. In the description of the invention it is claimed that the GSM network connection and corresponding GPRS/IP connection established using a physical SIM card will stay active for a few seconds even after disconnection of the SIM card and these few seconds can be enough to established second GPRS/IP connection with the SIM card server.

But as with one GSM modem (*GSM engine*) it is not possible to establish two simultaneous connections to GSM network and corresponding GPRS/IP connections, then obviously the proposed solution does not work in practice or is very unstable.

One possible option to overcome the above shortcomings is to use roaming, which of course is convenient, but too expensive and technologically restricted. For example it does not support 4G/LTE networks and uses international data communication channels ineffectively via GRX (a GPRS Roaming exchange - acts as a hub for DATA connections from roaming users, removing the need for a dedicated link between each GPRS service provider), being one of the reasons why tariffs for roaming's are high. Also using GRX limits the speed of internet in roaming.

A partial alternative to eliminate difficulties in connection with replacement of SIM cards is to use public Wi-Fi networks, but in general their coverage area is restricted and uneven, so to get a connection may be complicated.

The use of a special distributing mobile Wi-Fi router (MiFi) supporting several clients may also be considered, but it requires manual SIM cards replacement when travelling from one country to another. An interesting alternative could also be to use a SIM card having several IMSI-s for different network operators, but unfortunately the operators as a rule do not disclose their Ki codes and therefore this kind of technology is rather limited.

In view of the above inconveniences and rather high cost of using mobile Internet the present invention provides a device and method for using mobile Internet at the local operator's relatively low cost but at the same time without a need to conclude a contract with the local operator, there is no need to know the local language and no need to manually replace SIM cards when travelling from one country to another.

The advantages of the present invention when compared with its alternative - roaming - are its low price and higher speed, also the possibility to use LTE networks. When compared with Wi-Fi networks the advantages of the invention are substantially better coverage and the possibility to switch between GSM/UMTS/LTE networks.

The present invention has the following advantages over the prior art.
- More effective use of international data communication channels without a need to use GRX (*GPRS - roaming eXchange*)*.*
- May reduce the IP-network latency (PING) because uses local IP address instead of home network IP address. It can improve quality of VOIP services in comparison with roaming.
- There is no need to use any authentication codes (Ki - codes), that is an advantage when compared with several IMSI subscribers.
- In case of necessity the client's mobile device supports mobile communication with several IMSI-s using authentication codes Ki required in some areas, thus minimizing the number of physical SIM cards in a SIM card array server.
- User's mobile device enables to remarkably reduce costs by proposing Internet options for a number of users exactly for a period of time as long as required (for example for a few days), without a need to sign a contract with the local operator or purchase local prepaid SIM card.
- A server control unit analyzes user's location and determines, taking into consideration expenses, the optimum conditions, i.e. SIM card(s) in a visited country. For this reason the access to the Internet is cheaper than roaming.
- User's mobile device according to the invention permits access to the Internet for a single user or similarly to MiFi (mobile hot spot) tethering the Internet connection for several users, thus being very convenient to use.
- User's mobile device functions in a fully automatic mode and does not require manual replacement of a SIM card when arriving in a new country or in a coverage area of another operator, thus the solution according to the present invention is more convenient than purchasing local SIM cards or making contracts and it starts to function immediately after it has been switched on. User's mobile device also supports 4G/LTE technology and therefore it is faster than roaming and wider available.
- For functioning a SIM card emulator does not require authentication keys Ki and as a result there are no problems related with a coverage area differently from a SIM card with MULTI IMSI technology. But the latter technology is covered by the present invention and in some cases it helps to save the server capacity by changing physical SIM cards for their virtual images.

The following problems have been solved by the present invention.
1. First - the change of SIM cards performed in the server by automatic selection of a subscription. As an alternative, the use of several IMSI-s on one SIM card was considered, but it was abandoned as for safety reasons the operators do not reveal authentication keys Ki. Based on the above, the technology using a SIM card emulator was selected whereas in that case the authentication keys Ki are not needed.
2. Second - adjustment of the Internet parameters - automatic uploading of parameters from a common database analogous to a Mobile Think database was under discussion. Taking into consideration a large number of mobile devices and also a large number of such devices that cannot be adjusted automatically, then in practice it is practically impossible to set up a reliable automatic adjusting system for all handsets/devices. For this reason it was decided to use one separate user's mobile device having the same functions as MiFi (mobile hot spot), the adjustment procedure of which is fixed and by means of which it is possible to distribute the Internet between several user's devices.

### Summary of invention

The main object of the present invention is to make it possible for an ordinary user to use the local cheap Internet service without a need to conclude agreement(s) with local operator(s), to combine convenience and simplicity of international roaming with a favorable scale of charges and to use technological advantages of local operators, providing the end user with the mobile Internet. In order to solve these problems, respective contracts and subscriptions have been concluded beforehand, and stored in a remote server either as an array of physical SIM cards or their virtual images. On request they are connected to the user's mobile device in an automatic mode according to the present invention.

The proposed method according to the present invention enables the user of respective end devices (i.e. mobile phone, laptop etc.) to access the Internet during roaming through mobile networks (GSM/UMTS/LTE), where authorization by means of a SIM card is required. There is no need to contact local mobile operator in the visited country in order to conclude a respective agreement, neither it is necessary to purchase several different SIM cards. User's end devices (i.e. mobile phone, laptop, etc.) are connected to Internet via Wi-Fi (local area network) provided by user's mobile device according to the present invention. User's mobile device connects to the server via the Internet using a dedicated GSM/UMTS/LTE radio module. The server determines the network where user is located at this moment using PLMN (the public land mobile network) of SIM card in this dedicated GSM/UMTS/LTE radio module.

According to the network (PLMN) the server selects the SIM card most appropriate for in the visited country and transmits the required information and Internet settings (e.g. APN, Username, Password, Proxy) via the Internet back to the user's mobile device. User's mobile device uses this information in SIM card emulator. User's mobile device using another GSM/UMTS/LTE radio module with this SIM card emulator registers in the mobile network and thereafter connects to the mobile Internet. The user's mobile device will share this mobile Internet via Wi-Fi for all user's end devices simultaneously. The advantage of the invention is that a single user's mobile device can be used for connecting to the Internet in different visited countries without a need for separate physical SIM cards. At the same time there is no need to contact a local network operator either.

Further object of the present invention is to propose a system that enables user's respective end devices (i.e. mobile phone, laptop etc.) to access the Internet during roaming through mobile networks (GSM/UMTS/LTE). At the same time there is no need to contact a local mobile network operator in the visited country. The system according to the invention includes a user's mobile device to connect user's end devices (i.e. mobile phone, laptop, etc.) to the Internet, and a server. User's mobile device includes a first radio module containing an Internet access device. This Internet access device in turn includes a unit for providing local area network (Wi-Fi), and a GSM/UMTS/LTE radio module. The latter, instead of a physical SIM card, uses a SIM card emulator.

The system server includes a control unit and a SIM card. For communication with a server the user's mobile device has a second radio module, including a GSM/UMTS/LTE radio module and a physical SIM card. The SIM card of the server includes either an array of physical SIM cards or also virtual SIM cards.

### Brief description of drawings

FIG 1 shows a structural circuitry of a system used for execution of the method according to the invention.

FIG 2 shows simplified block diagrams of user's device and server, included in the system of FIG 1.

### Description of embodiments

Further one possible embodiment of the invention is described with reference to the appended drawings.

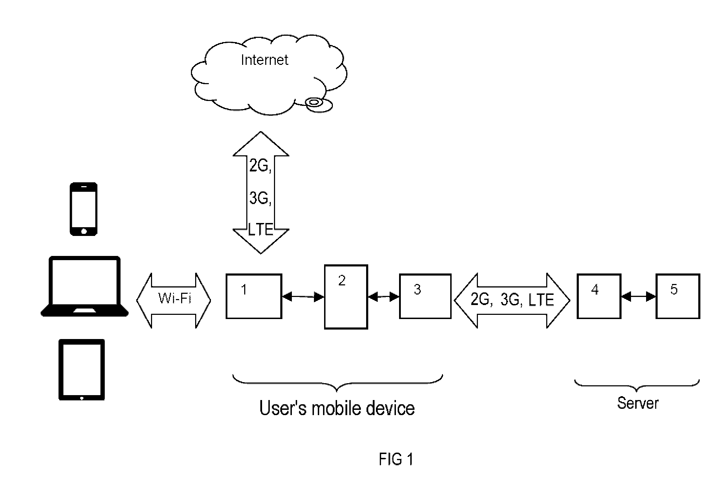

FIG 1 illustrates a principal structure of a system according to the present invention for accessing to the Internet without a need for the user to communicate directly with a local operator. The described system includes a user's mobile device and a server. The user's mobile device includes an Internet access device 1, SIM card emulator 2 and an access device to the server 3. The server includes a server control unit 4 and a physical or a virtual SIM card 5.

The system operation includes the following steps.
1. The user connects his/her mobile devices (i.e. mobile phone, laptop, iPad, etc.) with the Internet access device 1. For this purpose wireless local network (Wi-Fi), Bluetooth or also a wired connection, for example USB, LAN, etc. may be used. The Internet access device 1 may include a radio module operating on different frequencies and according to different technologies, assuring access to various networks used in the world, for example to GSM/UMTS/LTE network.
2. The Internet access device 1 attempts, using a SIM card emulator 2, to register in a mobile network. (Alternative scenario: in specific cases when Ki-key is available from Mobile Operator, the SIM card emulator may also include a virtual SIM unit that uses authentication keys Ki and IMSI identifiers stored in local memory without a need to connect to the server).
3. The SIM card emulator 2 connects to the access device to server 3. At that the access device to the server 3 may instead of GSM/UMTS use other channels, for example Wi-Fi or GSM USSD for accessing server.
4. The access device to the server 3 connects to a server control unit 4, using the Internet through mobile networks (GSM, UMTS, etc).
5. Server control unit 4 detects by location of the access device to the server 3 that public land mobile network (PLMN) where the user is, using network information from the wireless module of access device to the server 3, location update, Cell's ID or other method. In order to acquire these data the server may be connected to the operator of mobile network.
6. According to PLMN the server control unit 4 selects a suitable SIM card 5 and transmits all the requested data, including the Internet settings, for example APN (Access Point Name), via the Internet back to the access device to the server 3.
7. The access device to the server 3 transmits the required information to the SIM card emulator 2, whereupon the SIM card emulator 2 allows the Internet access device 1 to register in the mobile network, to apply the Internet settings, e.g. APN and to permit user's end devices to connect to the Internet via this mobile network.

When the Internet access device 1 has established connection to the Internet, the SIM card emulator's 2 next access to the server may take place using the same Internet access device 1. This may be done in order to save traffic resources used for roaming by the access device to the server 3. The established access to the server required for selected technology of SIM card emulator 2 for each GSM authentication procedure.

A user's mobile device may be provided with a data amount counter or some other mechanism facilitating presentation of invoices, including but not limited to an algorithm for replacing a SIM card in a SIM card emulator at the moment when a certain data amount margin is achieved.

One of the advantages of the present invention is the use of two radio modules, which assures higher fault tolerance for example in case when for some reason it is not possible to address the server and a SIM card emulator stops to function during the location update procedure (the location update procedure allows a mobile device to inform the cellular network, whenever it moves from one location area to the next). In case of such an extraordinary event it is possible, using the access device 3, to assure a fully automatic and unnoticed by the user access to the Internet, using usual roaming.

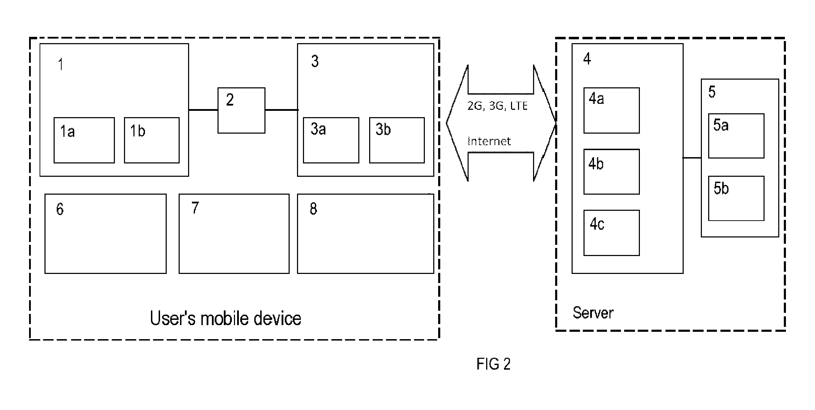

As an alternative, it is possible to use the same above described circuitry in a two SIM card phone unit instead of a user's two-radio-module mobile device. This mobile phone unit must have two independent radio modules, one SIM card emulator instead of a SIM card and one physical SIM card. In this case the first radio module is used as an Internet access device 1 (FIG 2), which is connected with a SIM card emulator 2 instead of a SIM card and the second radio module contains physical SIM card and it is used as an access device to the server 3. This kind of phone can be used for communication with the Internet and also for connecting end user's other devices to the Internet. The SIM card in the access device to the server 3 can also be used for performing regular activities (such as making calls, sending SMS's).

The following positive aspect of integrating the present invention into a mobile phone is the possibility to use other services (calls and SMS) through a SIM card emulator as effectively as while using the Internet.

In the following with reference to FIG 2 the preferred embodiment of the system and functioning of the system will be described in detail.

As can be seen from FIG 2, the system consists of a user's mobile device, that assures access to the Internet, and a server.

The user's mobile device has an Internet access device 1, which in essence is a first radio module and includes a Wi-Fi access device 1a and a GSM/UMTS/LTE radio module 1b. The radio module 1b is connected to a SIM card emulator 2 instead of a physical SIM card. The SIM card emulator 2 is connected to the access device to the server 3, which in essence is a second radio module including GSM/UMTS radio module 3a and contains a physical SIM card 3b.

The user's mobile device further has a control unit 6, including software necessary to perform all logical operations, and also a user interface 7 and an autonomous power supply 8.

The Internet access device 1 (Wi-Fi access device 1a), the autonomous power supply 8, user interface 7 are not necessarily obligatory in case a user's device is used together with an apparatus already having its own power supply and user interface (i.e. laptop, mobile phone, desktop, computer, etc.). This allows to reduce the cost and size of the user's mobile device. Connection of user's device may be performed using any kind of a standard interface (e.g. USB), that assures powering and data communication.

The server of the system is also connected to the Internet, via which connection between the server and the access device to the server 3 is established.

The server control unit 4 includes a unit 4a, having software which controls operational logic, a unit 4b containing an Internet settings (APN etc.) database, other required databases and executes billing of clients on administrative interface 4c and also a SIM card 5, which can be an array of physical SIM cards 5a or virtual images of SIM cards 5b, where International Mobile Subscriber Identities, Ki codes, etc. are stored.

The system according to the present invention works as follows.
1. First the user connects his/her mobile devices (mobile phone, laptop, iPad, etc.) to the local network (Wi-Fi) access device 1a.
2. Further the SIM card emulator 2 is connected via access device to the server 3 with the server.
3. Using mobile network (GSM, UMTS, etc.) connection is established via the Internet between GSM/UMTS/LTE radio module 3a, having a SIM card 3b, and the server control unit 4.
4. The server control unit 4 detects PLMN where user is located, by location of the access device to the server 3, using PLMN from user's mobile device, location update, cell's ID or other method.
5. According to PLMN the server control unit 4 selects the corresponding SIM card 5, performs necessary actions with it and transfers all required information, including Internet settings (e.g. APN) via the Internet back to the access device to the server 3.
6. The access device to the server 3 delivers the required information to the SIM card emulator 2, whereupon the SIM card emulator 2 will grant to the Internet access device 1 access to the mobile network, the latter will apply Internet settings (e.g. APN) and thereafter permit all end user's devices access to the Internet.
7. When the Internet accessing device 1 has established connection to the Internet, the SIM card emulator's next access to the server may take place using the same Internet access device 1 in order to reduce traffic resources used for roaming in the access device to the server 3.
8. It is also possible to use one SIM card from the SIM card array for accessing the Internet in several mobile devices that belong to different users. This process is done by automatically reassigning the SIM card in SIM card array from user's one mobile device, which is not currently using the Internet, to another mobile device of a different user, who wants to use the Internet. This procedure allows to use one SIM card in several mobile devices one device after another.

Present invention is not limited to the presented above description and to the persons skilled in the art it is obvious that several modifications without departing from the scope of the invention defined by the appended claims are possible.

## Claims

1. Method for providing access to the Internet for user's end devices (mobile phone, laptop, etc.) during roaming through mobile networks (GSM/UMTS/LTE/etc), where a SIM card is required, without a need to contact a local mobile operator in the visited country, according to which method in order to enable user's end devices access to the Internet, user's mobile device and a server are used, **characterized in that** the method comprises the following steps:
user's end devices (mobile phone, laptop, etc.) are connected to a local network Wi-Fi access device (1a),
after switching on user's mobile device the access device to the server (3) is registered in the network and by means of this unit (3), using the (GSM/UMTS/LTE) radio module (3a) it contains, a connection via the Internet with a server is established,
SIM card emulator (2) in user's mobile device is switched on;
by means of a server control unit (4) the location of an access device to the server (3), containing a separate physical SIM card, the network (PLMN) is detected where user is located,
according to the network (PLMN) the server's control unit (4) selects from the SIM card array the SIM card most appropriate for the user's device in the visited country and all required information stored in this SIM card and Internet settings (e.g. APN), is transmitted via the Internet back to the access device to the server (3),
required information is delivered by the access device to the server (3) to the SIM card emulator (2),
the SIM card emulator (2) allows the Internet access device (1) to get registered in mobile network (GSM/UMTS/LTE) in order to have an access to the mobile Internet and then the Internet access device (1) shares this access to the mobile Internet via Wi-Fi to all user's end devices.

2. Method according to claim 1, **characterized in that** one SIM card from the SIM card array can be used for accessing the Internet by different users one after another automatically, reassigning one SIM card in SIM card array from one user's mobile device, which is not currently using the Internet, to another user's mobile device, which would start using the Internet.

3. Method according to claim 1, **characterized in that** one SIM card from SIM card array which can be used for accessing the Internet by user's several end devices simultaneously.

4. System for providing access to the Internet by user's end devices (mobile phone, laptop, etc.) during roaming through mobile networks (GSM/UMTS/LTE) without a need to contact a local mobile operator in the country visited when roaming, the system in order to enable by user's end devices (mobile phone, laptop, etc.) access to the Internet includes a user's mobile device and a server, whereby user's mobile device contains a first radio module having an Internet access device (1), that contains a Wi-Fi access device (1a) and a (GSM/UMTS/LTE) radio module (1b), and in which instead of a physical SIM card a SIM card emulator (2) is used, a control unit (6), a user interface (7) and autonomous power supply (8), and the server includes a server control unit (4) and a SIM card (5), **characterized in that** for communication with the server the user's mobile device contains a second radio module, including the access device to the server (3), containing (GSM/UMTS/LTE) radio module (3a) and a physical SIM card (3b).

5. System according to claim 1, **characterized in that** server's SIM card (5) contains an array of physical SIM cards (5a).

6. System according to claim 1, **characterized in that** server's SIM card (5) contains virtual SIM cards (5b).
